# EUROPÄISCHE PATENTANMELDUNG

(11) **EP 3 813 212 A1**
(43) Veröffentlichungstag der Anmeldung: **28.04.2021**
(21) Anmeldenummer: 20197260.1
(22) Anmeldetag: 21.09.2020
(51) Int. Cl.: H02G 11/00

(54) **KABELHALTEANORDNUNG FÜR EIN ANSCHLUSSKABEL EINER VERSORGUNGSSTATION**

(30) Priorität: 04.10.2019 DE 102019126794
(71) Anmelder: Compleo Charging Solutions AG, 44309 Dortmund (DE)
(72) Erfinder: Lachmann, Raphael, 59394 Nordkirchen (DE); Jendrusch, Peter, 44536 Lünen (DE); Kachouh, Checrallah, 44227 Dortmund (DE)
(74) Vertreter: Wickord, Wiro

(57) **Zusammenfassung**

Die Erfindung betrifft eine Kabelhalteanordnung (1, 1.1, 1.2) für ein Anschlusskabel (2, 2.1, 2.2) einer Versorgungsstation (3) umfassend ein ortsfest installiertes Gehäuse (5, 5.1, 5.2), umfassend ein in dem Gehäuse (5, 5.1, 5.2) zu einer um eine Drehachse (A2) drehbare Rolle (8) geführtes, zugkraftbelastetes Halteseil (6, 6.1, 6.2) und umfassend eine Umlenkeinheit (7, 7.1, 7.2), welche um eine Schwenkachse (A1) schwenkbar an dem Gehäuse (5, 5.1, 5.2) gehalten ist und die drehbare Rolle (8) vorsieht, wobei die Drehachse (A2) und die Schwenkachse (A1) einander nicht schneiden. Ferner betrifft die Erfindung eine Installationsanordnung mit einer Versorgungsstation (3) sowie einer Kabelhalteanordnung (1, 1.1, 1.2) zum Halten eines Anschlusskabels (2, 2.1, 2.2) der Versorgungsstation (3).

## Beschreibung

Die Erfindung betrifft eine Kabelhalteanordnung für ein Anschlusskabel einer Versorgungsstation, die insbesondere der Bereitstellung von elektrischer Energie für ein elektrisch betreibbares Fahrzeug dient. Ferner betrifft die Erfindung eine Installationsanordnung mit einer Versorgungsstation sowie einer Kabelhalteanordnung zum Halten eines Anschlusskabels der Versorgungsstation.

Als elektrisch betreibbare Fahrzeuge im Sinne der Erfindung gelten alle Automobile (PKW, LKW, Wohnmobile, Zweiräder, Busse, Transporter usw.), Schienenfahrzeuge (insbesondere Lokomotiven), Wasserfahrzeuge (Schiffe), Luftfahrzeuge sowie Anhänger (Wohnanhänger), mobile Verkaufsstände usw.

Eine Versorgungsstation im Sinne der Erfindung kann zum einen als Ladestation ausgebildet sein und der Bereitstellung elektrischer Energie für ein elektrisch betreibbares Fahrzeug dienen. Beispielsweise kann eine Versorgungsstation zu diesem Zweck in einem öffentlichen Versorgungsnetz verbunden sein. Darüber hinaus kann die Versorgungsstation ausgebildet sein zur Einspeisung von Energie aus einem Energiespeicher des Fahrzeugs in das öffentliche Versorgungsnetz. Die Versorgungsstation kann ebenso verwendet werden zum Bereitstellen von elektrischer Energie für Fahrzeuge ohne Energiespeicher.

Aus der DE 10 2017 100 638 A1 ist eine Kabelhalteanordnung bekannt mit einer gegen die Horizontale geneigt angeordneten Laufschiene und mit einem an der Laufschiene längsverschiebbaren Balancer. Der Balancer weist zum Tragen des Anschlusskabels ein federkraftbelastetes Halteseil auf. Die Laufschiene und mithin die Kabelhalteanordnung ist als integraler Teil der Versorgungsstation realisiert.

Aus der DE 20 2019 102 323 U1 ist eine Kabelhalteanordnung für ein Anschlusskabel mit einem zugkraftbelasteten Halteseil bekannt, welches über eine Mehrzahl von nach Art eines Flaschenzugs zusammenwirkenden Rollen umgelenkt wird.

Aufgabe der vorliegenden Erfindung ist es, eine verbesserte Kabelhalteanordnung sowie eine Installationsanordnung hiermit anzugeben.

Zur Lösung der Aufgabe weist die Erfindung die Merkmale des Patentanspruchs 1 auf. Demzufolge umfasst die Kabelhalteanordnung für ein Anschlusskabel einer Versorgungsstation ein ortsfest montiertes Gehäuse, ein in dem Gehäuse zu einer um eine Drehachse drehbaren Rolle geführtes, zugkraftbelastetes Halteseil und eine Umlenkeinheit, welche um eine Schwenkachse schwenkbar an dem Gehäuse gehalten ist und die drehbare Rolle vorsieht. Die Drehachse der Rolle und die Schwenkachse der Umlenkeinheit sind zueinander beabstandet, das heißt sie schneiden beziehungsweise berühren einander nicht. Beispielsweise ist das Gehäuse als bodenstehendes Gehäuse vorgesehen und/oder abschnittsweise in den Boden eingelassen zur Festlegung desselben.

Der besondere Vorteil der Erfindung besteht darin, dass durch die Beabstandung der Drehachse und der Schwenkachse beim Handhaben des Anschlusskabels, das heißt insbesondere beim Anschließen oder Trennen des Fahrzeugs von der Versorgungsstation, ein Drehmoment auf die Umlenkeinheit ausgeübt wird, welches zu einem selbsttätigen Verschwenken der Umlenkeinheit und zu einer Selbstausrichtung der Umlenkeinheit und des Halteseils führt. Der Benutzer wird insofern bei der Handhabung der Versorgungsstation beziehungsweise des Anschlusskabels entlastet. Auf das Halteseil wirkt dabei eine Zugkraft, die das Eigengewicht des Anschlusskabels wenigstens teilweise ausgleicht mit der Folge, dass der Benutzer in Bezug auf die Positionierung des Anschlusskabels und zusätzlich auch beim Tragen desselben entlastet ist.

Die erfindungsgemäße Kabelhalteanordnung ist sehr einfach aufgebaut. Im Wesentlichen umfasst sie das Gehäuse, die Umlenkeinheit mit der Rolle sowie das zugkraftbelastete Halteseil. Die Komplexität der Kabelhalteanordnung ist insofern gering. Zugleich ergibt sich eine hohe mechanische Robustheit, so dass eine Verwendung im Freien unkritisch ist. Die Rolle für das Halteseil ist dabei als Teil der Umlenkeinheit um die Schwenkachse schwenkbar zu dem Gehäuse vorgesehen.

Nach einer bevorzugten Ausführungsform der Erfindung können die Schwenkachse und die Drehachse zueinander winkelversetzt, das heißt nicht parallel angeordnet sein. Bevorzugt kann zwischen der Schwenkachse und der Drehachse ein Winkel von 90° gebildet sein. Beispielsweise kann die Schwenkachse vertikal orientiert sein, während die Drehachse horizontal orientiert ist. Hierdurch ergibt sich eine besonders vorteilhafte Handhabbarkeit. Insbesondere ist die intuitive Bedienung der Kabelhalteanordnung begünstigt.

Nach einer Weiterbildung der Erfindung ist das Halteseil jedenfalls abschnittsweise koaxial zu der Schwenkachse orientiert. Vorteilhaft vereinfacht sich die Zuführung des Halteseils zur Umlenkeinheit, wenn das Halteseil der Rolle koaxial zur Schwenkachse zugeführt wird, und die Kabelhalteanordnung kann sehr kompakt ausgeführt werden. Insbesondere ist das Halteseil im Gehäuse koaxial zur Schwenkachse vorgesehen.

Nach einer Weiterbildung der Erfindung ist ein Schwenkwinkel der Umlenkeinheit um die Schwenkachse begrenzt und bevorzugt kleiner als 360°. Es ist hier durch sichergestellt, dass das an dem Halteseil festgelegte Anschlusskabel sich nicht um das Gehäuse der Kabelhalteanordnung wickeln kann.

Nach einer Weiterbildung der Erfindung sieht die Kabelhalteanordnung zur Beaufschlagung des Halteseils mit einer Zugkraft ein Gewicht vor, welches an dem Halteseil befestigt und in dem Gehäuse vorgesehen ist. Vorteilhaft ermöglicht es das Vorsehen des Gewichts, das Halteseil in besonders einfacher Weise mit einer Zugkraft zu beaufschlagen. Zudem ist das Gewicht in dem Gehäuse geschützt angeordnet, sodass sich eine hohe Robustheit und Zuverlässigkeit ergibt und insbesondere der Gefahr einer Klemmung vorgebeugt ist. Alternativ kann die Zugkraft beispielsweise über eine mechanische Feder oder eine Gasdruckfeder bereitgestellt sein.

Nach einer Weiterbildung der Erfindung ist das Gehäuse der Kabelhalteanordnung durch ein Hohlprofil und bevorzugt durch ein mantelseitig geschlossenes Rohr, beispielsweise ein Rohr mit einem kreisförmigen Querschnitt, gebildet. Bevorzugt ist die Schwenkachse der Umlenkeinheit durch eine Längsmittelachse des Hohlprofils definiert. Vorteilhaft kann die Kabelhalteanordnung durch die Verwendung eines Hohlprofils als Gehäuse sehr kostengünstig ausgeführt und durch einen angepassten Zuschnitt des Hohlprofils in unterschiedlichen Größen beziehungsweise Längen hergestellt werden.

Nach einer Weiterbildung der Erfindung sieht die Umlenkeinheit eine Abdeckung vor, welche das Gehäuse jedenfalls abschnittsweise im Bereich einer dem Boden abgewandten Stirnseite sowie die Rolle umgreift. Vorteilhaft ist hierdurch das Gehäuse gegen eindringende Feuchtigkeit und/oder Schmutz geschützt. Darüber hinaus ist ein mechanischer Schutz der Rolle durch die Abdeckung realisiert. Die Abdeckung ist als Teil der Umlenkeinheit wie die Rolle um die Schwenkachse schwenkbar zu dem Gehäuse vorgesehen. Bevorzugt ist die Abdeckung aus einem Kunststoffwerkstoff gefertigt.

Nach einer Weiterbildung der Erfindung sieht die Abdeckung eine dem Boden zugewandte Öffnung für das Halteseil vor. Vorteilhaft ist einem Eindringen von Schmutz in die Umlenkeinheit und/oder das Gehäuse der Kabelhalteanordnung durch die Orientierung der Öffnung der Abdeckung zum Boden entgegengewirkt.

Nach einer Weiterbildung der Erfindung sieht die Kabelhalteanordnung eine einzige Umlenkrolle für das Halteseil vor. Vorteilhaft vereinfacht sich hierdurch der konstruktive Aufwand signifikant.

Zur Lösung der Aufgabe weist die Erfindung die Merkmale des Patentanspruchs 12 auf. Demzufolge umfasst eine Installationsanordnung eine Versorgungsstation zum Bereitstellen von elektrischer Energie für ein elektrisch betreibbares Fahrzeug mit wenigstens einem Anschlusspunkt. Die Versorgungsstation sieht für den wenigstens einen Anschlusspunkt ein angeschlagenes Anschlusskabel und einen endseitig an dem Anschlusskabel festgelegten Stecker vor zum Verbinden der Versorgungsstation mit dem Fahrzeug. Ferner umfasst die erfindungsgemäße Installationsanordnung wenigstens eine Kabelhalteanordnung nach einem der Ansprüche 1 bis 11. Das Halteseil der Kabelhalteanordnung ist dabei an dem Anschlusskabel der Versorgungsstation festgelegt.

Der besondere Vorteil der Erfindung besteht darin, dass eine Handhabung des Anschlusskabels der Versorgungsstation durch das Vorsehen der Kabelhalteanordnung vereinfacht wird. Beispielsweise kann eine erfindungsgemäße Kabelhalteanordnung nachträglich an einer bestehenden Versorgungsstation installiert werden. Auf eine Integration der Kabelhalteanordnung in beziehungsweise an die Versorgungsstation ist insofern verzichtet.

Nach der Erfindung kann vorgesehen sein, dass die Versorgungsstation getrennt von der Kabelhalteanordnung am Boden festgelegt ist. Die Versorgungsstation kann beispielsweise einen eigenen Sockel vorsehen zur Festlegung derselben im Boden.

Sofern die Versorgungsstation zwei oder mehr Anschlusspunkte mit zwei oder mehr Anschlusskabeln vorsieht, kann nach der Erfindung für jeden Anschlusspunkt beziehungsweise jedes Anschlusskabel eine eigene Kabelhalteanordnung installiert sein.

Nach einer Weiterbildung der Erfindung entspricht ein Abstand zwischen dem endseitig an dem Anschlusskabel vorgesehenen Stecker und einem Haltepunkt, an dem das Halteseil der Kabelhalteanordnung an dem Anschlusskabel festgelegt ist, wenigstens 20 % und höchstens 80 % einer Gesamtlänge des Anschlusskabels. Vorteilhaft ergibt sich hierdurch eine gute Unterstützung und Entlastung des Benutzers beim Handhaben des Anschlusskabels.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Kabelhalteanordnung gelten selbstverständlich auch im Zusammenhang mit der erfindungsgemäßen Installationsanordnung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

### Es zeigen:

- Fig. 1: eine Schnittdarstellung einer erfindungsgemäßen Kabelhalteanordnung in einer Gesamtansicht,
- Fig. 2: eine vergrößerte Darstellung einer Umlenkeinheit der Kabelhalteanordnung nach Figur 1 und
- Fig. 3: eine erfindungsgemäße Installationsanordnung mit einer Versorgungsstation und zwei der Versorgungsstation zugeordneten Kabelhalteanordnungen.

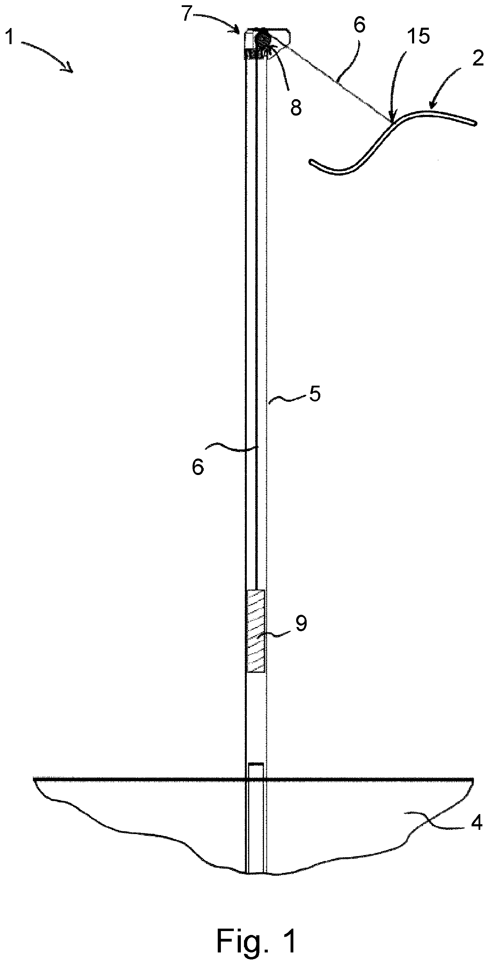

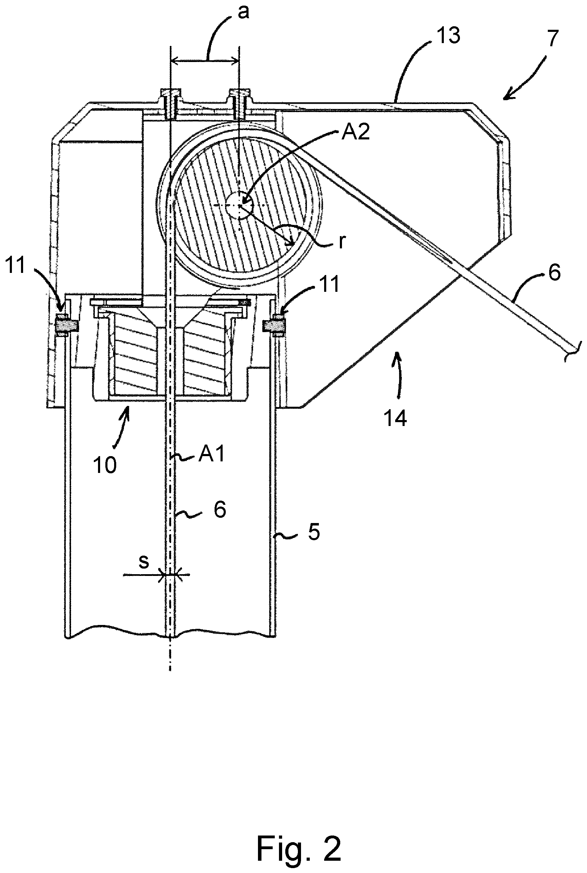

Eine erfindungsgemäße Kabelhalteanordnung 1 gemäß der Fig. 1 und 2 umfasst als wesentliche Komponenten ein Gehäuse 5, ein um eine Schwenkachse A1 schwenkbar an dem Gehäuse 5 gehaltene Umlenkeinheit 7 mit einer Rolle 8, welche drehbar um eine Drehachse A2 vorgesehen ist, sowie ein zugkraftbelastetes Halteseil 6, welches endseitig an einem nicht der Kabelhalteanordnung 1 zugehörigen Anschlusskabel 2 einer elektrischen Versorgungsstation gehalten ist. Das Gehäuse 5 der Kabelhalteanordnung 1 ist an einem Boden 4 festgelegt. Insbesondere ist das Gehäuse 5 zur Festlegung desselben in dem Boden 4 eingelassen. Beispielsweise kann das Gehäuse 5 in dem Boden 4 verankert sein und/oder über einen Sockel beziehungsweise ein Fundament am Boden 4 festgelegt werden.

Das Gehäuse 5 der Kabelhalteanordnung ist im vorliegenden Ausführungsbeispiel der Erfindung durch ein Rohr mit einem kreisförmigen Querschnitt gebildet. Eine Längsmittelachse des Rohrs definiert dabei zugleich die Schwenkachse A1 der Umlenkeinheit 7. Das Rohr weist einen in eine Längsrichtung konstanten Querschnitt auf. Beispielsweise ist das Rohr aus einem Strangprofil hergestellt.

Das Halteseil 6, welches in dem Gehäuse 5 zu der Umlenkeinheit 7 beziehungsweise der Rolle 8 der Umlenkeinheit 7 geführt ist, ist in dem Gehäuse 5 koaxial zur Schwenkachse A1 orientiert beziehungsweise angeordnet. Zur Zugkraftbeaufschlagung des Halteseils 6 ist in dem Gehäuse 5 endseitig an dem Halteseil 6 ein Gewicht 9 vorgesehen. Das Gewicht 9 ist in dem Gehäuse 5 längsverschiebbar.

Die Umlenkeinheit 7 der Kabelhalteanordnung 1 ist an einem dem Boden 4 abgewandten Ende des Gehäuses 5 drehbar gehalten. Zum Verbinden der Umlenkeinheit 7 und des Gehäuses 5 sind ein Gleitlager 10 und Schrauben 11 vorgesehen, über die das Gleitlager 10 an dem Gehäuse 5 der Kabelhalteanordnung 1 verdrehsicher gehalten ist. Das Gleitlager 10 ist dabei pfropfenartig ausgebildet und stirnseitig in das Gehäuse 5 eingesetzt. Das Gleitlager 10 sieht zentrisch eine Durchgangsausnehmung vor, durch die das Halteseil 6 geführt ist.

Die Rolle 8, welche in der Umlenkeinheit 7 um die Drehachse A2 drehbar gehalten ist, dient zum Umlenken des Halteseils 6. Die Abdeckung 13 umgreift das Gehäuse 5 an der dem Boden 4 abgewandten Stirnseite. Ebenfalls umgreift die Abdeckung 13 die Rolle 8. Die Abdeckung 13 sieht darüber hinaus eine dem Boden 4 zugewandte Öffnung 14 vor. Durch die Öffnung 14 ist das Halteseil 6, welches der Umlenkeinheit 7 durch das Gehäuse 5 zugeführt ist, unter einem spitzen Winkel zur Horizontalen nach unten aus der Umlenkeinheit 7 herausgeführt.

Vorliegend ist die Schwenkachse A1 vertikal orientiert. Die Drehachse A2, welche die Schwenkachse A1 nicht schneidet, weist einen minimalen Abstand a von der Schwenkachse A1 auf. Die Achsen A1, A2 sind im 90°-Winkel zueinander orientiert. Der Abstand a entspricht einem effektiven Radius r der Rolle 8 zuzüglich einem halben Seildurchmesser s. Das Halteseil 6 wird insofern vertikal und tangential zu der Rolle 8 geführt und dort umgelenkt. Die Drehachse A2 der Rolle 8 ist horizontal orientiert.

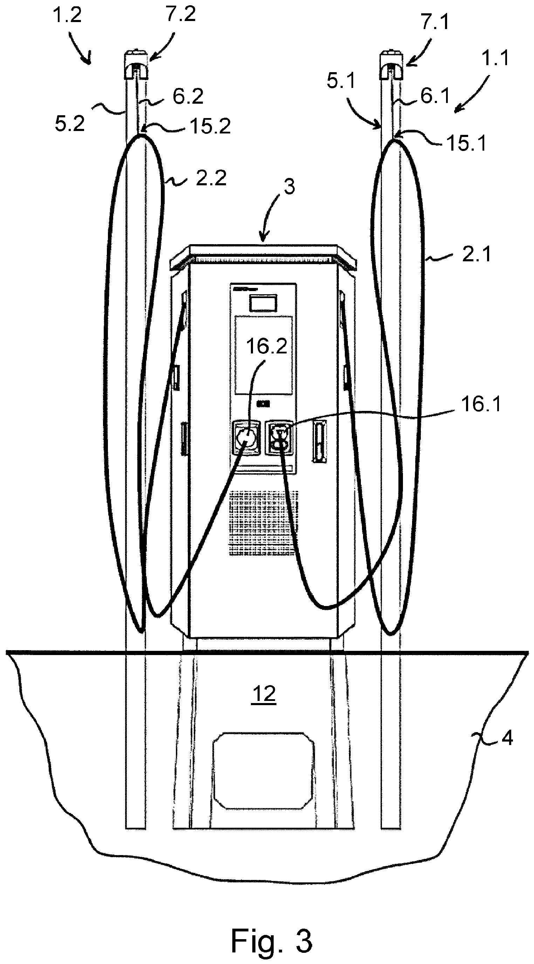

Eine erfindungsgemäße Installationsanordnung nach Fig. 3 umfasst eine Versorgungsstation 3 mit zwei Anschlusspunkten. Jedem Anschlusspunkt ist ein Anschlusskabel 2.1, 2.2 sowie ein endseitig an dem Anschlusskabel 2.1, 2.2 vorgesehener Stecker 16.1, 16.2 zugeordnet. Die Stecker 16.1, 16.2 dienen zum Verbinden der Ladestation 3 mit einem in den Figuren nicht dargestellten Fahrzeug. Die Anschlusskabel 2.1, 2.2 sind als angeschlagene Anschlusskabel 2.1, 2.2 realisiert. Die Versorgungsstation 3 ist über einen eigenen Sockel 12 im Boden 4 festgelegt.

Die erfindungsgemäße Installationsanordnung sieht des Weiteren zwei Kabelhalteanordnungen 1.1, 1.2 vor. Jede Kabelhalteanordnung 1.1, 1.2 umfasst ein Gehäuse 5.1, 5.2, eine schwenkbar im Bezug zu einer die vertikal orientierten Schwenkachse A1 an dem Gehäuse 5.1, 5.2 gehaltene Umlenkeinheit 7.1, 7.2 sowie ein zugkraftbelastetes Halteseil 6.1, 6.2.

Das Halteseil 6.1, 6.2 wird jeweils über eine als Teil der Umlenkeinheit 7.1, 7.2 ausgebildete, in Fig. 3 nicht dargestellte Rolle 8 der Kabelhalteanordnung 1.1, 1.2 umgelenkt. Das Halteseil 6.1, 6.2 ist endseitig an dem Anschlusskabel 2.1, 2.2 festgelegt. Ein Haltepunkt 15.1, 15.2, an dem das Halteseil 6.1, 6.2 mit dem Anschlusskabel 2.1, 2.2 verbunden ist, ist dabei - bezogen auf eine Gesamtlänge des Anschlusskabels 2.1, 2.2 - etwa auf halber Länge vorgesehen und insofern in einem näherungsweise gleichen Abstand zum Stecker 16.1, 16.2 beziehungsweise zur Versorgungsstation 3.

Die Kabelhalteanordnungen 1.1, 1.2 der erfindungsgemäßen Installationsanordnung sind getrennt von der Versorgungsstation 3 im Boden 4 festgelegt beziehungsweise verankert. Zur Festlegung der Kabelhalteanordnungen 1.1, 1.2 sind deren Gehäuse 5.1, 5.2 jeweils in dem Boden 4 eingelassen.

Gleiche Bauteile und Bauteilfunktionen sind durch gleiche Bezugszeichen gekennzeichnet.

## Patentansprüche

1. Kabelhalteanordnung (1, 1.1, 1.2) für ein Anschlusskabel (2, 2.1, 2.2) einer Versorgungsstation (3) umfassend
- ein ortsfest installiertes Gehäuse (5, 5.1, 5.2),
- ein jedenfalls abschnittsweise in dem Gehäuse (5, 5.1, 5.2) zu einer um eine Drehachse (A2) drehbare Rolle (8) geführtes, zugkraftbelastetes Halteseil (6, 6.1, 6.2) und
- eine Umlenkeinheit (7, 7.1, 7.2), welche um eine Schwenkachse (A1) schwenkbar an dem Gehäuse (5, 5.1, 5.2) gehalten ist und die drehbare Rolle (8) vorsieht,
wobei die Drehachse (A2) und die Schwenkachse (A1) einander nicht schneiden.

2. Kabelhalteanordnung (1, 1.1, 1.2) nach Anspruch 1, **dadurch gekennzeichnet, dass** die Schwenkachse (A1) winkelversetzt zur Drehachse (A2) vorgesehen ist.

3. Kabelhalteanordnung (1, 1.1, 1.2) nach Anspruch 1 oder 2, **dadurch gekennzeichnet, dass** zwischen der Schwenkachse (A1) und der Drehachse (A2) ein Winkel von 90° gebildet ist.

4. Kabelhalteanordnung (1, 1.1, 1.2) nach einem der Ansprüche 1 bis 3, **dadurch gekennzeichnet, dass** die Schwenkachse (A1) vertikal orientiert ist und/oder dass die Drehachse (A2) horizontal orientiert ist.

5. Kabelhalteanordnung (1, 1.1, 1.2) nach einem der Ansprüche 1 bis 4, **dadurch gekennzeichnet, dass** ein minimaler Abstand (a) der Schwenkachse (A1) von der Drehachse (A2) im Bereich eines effektiven Radius (r) der Rolle (8) plus/minus einem Seildurchmesser (s) des Halteseils (6, 6.1, 6.2) liegt und dass der minimale Abstand (a) der Schwenkachse (A1) von der Drehachse (A2) bevorzugt dem effektiven Radius (r) der Rolle (8) plus dem halben Seildurchmesser (s) entspricht.

6. Kabelhalteanordnung (1, 1.1, 1.2) nach einem der Ansprüche 1 bis 5, **dadurch gekennzeichnet, dass** das Halteseil (6, 6.1, 6.2) jedenfalls abschnittsweise koaxial zur Schwenkachse (A1) orientiert angeordnet ist und/oder dass eine einzige Rolle (8) vorgesehen ist zum Umlenken des Halteseils (6, 6.1, 6.2).

7. Kabelhalteanordnung (1, 1.1, 1.2) nach einem der Ansprüche 1 bis 6, **dadurch gekennzeichnet, dass** zur Beaufschlagung des Halteseils (6, 6.1, 6.2) mit einer Zugkraft ein Gewicht (9) an dem Halteseil (6, 6.1, 6.2) festgelegt ist, wobei das Gewicht (9) bevorzugt in dem Gehäuse (5, 5.1, 5.2) vorgesehen ist.

8. Kabelhalteanordnung (1, 1.1, 1.2) nach einem der Ansprüche 1 bis 7, **dadurch gekennzeichnet, dass** das Gehäuse (5, 5.1, 5.2) durch ein Hohlprofil und bevorzugt durch ein Rohr und besonders bevorzugt durch ein Rohr mit einem kreisförmigen Querschnitt gebildet ist und/oder dass die Schwenkachse (A1) einer Längsmittelachse des Hohlprofils entspricht und/oder dass das Hohlprofil in eine Längsrichtung desselben einen konstanten Querschnitt aufweist.

9. Kabelhalteanordnung (1, 1.1, 1.2) nach einem der Ansprüche 1 bis 8, **dadurch gekennzeichnet, dass** das Gehäuse (5, 5.1, 5.2) an einem Boden (4) festgelegt und/oder zur Festlegung desselben abschnittsweise in den Boden (4) eingelassen ist.

10. Kabelhalteanordnung (1, 1.1, 1.2) nach einem der Ansprüche 1 bis 9, **dadurch gekennzeichnet, dass** die Umlenkeinheit (7, 7.1, 7.2) eine Abdeckung (13) vorsieht, wobei die Abdeckung (13) als Teil der Umlenkeinheit (7, 7.1, 7.2) um die Schwenkachse (A2) schwenkbar zu dem Gehäuse (5, 5.1, 5.2) vorgesehen ist und/oder wobei die Abdeckung (13) das Gehäuse (5, 5.1, 5.2) jedenfalls abschnittsweise an einer dem Boden (4) abgewandten Seite und/oder die Rolle (8) umgreift und/oder wobei die Abdeckung (13) eine dem Boden (4) zugewandte Öffnung (14) vorsieht, durch die das Halteseil (6, 6.1, 6.2) geführt ist.

11. Kabelhalteanordnung (1, 1.1, 1.2) nach einem der Ansprüche 1 bis 10, **dadurch gekennzeichnet, dass** ein Gleitlager (10) zum schwenkbaren Verbinden des Gehäuses (5, 5.1, 5.2) mit der Umlenkeinheit (7, 7.1, 7.2) vorgesehen ist und/oder dass ein Schwenkwinkel der Umlenkeinheit (7, 7.1, 7.2) um die Schwenkachse (A1) kleiner ist als 360°.

12. Installationsanordnung umfassend eine Versorgungsstation (3) zum Bereitstellen von elektrischer Energie für ein elektrisch betreibbares Fahrzeug mit wenigstens einem Anschlusspunkt, wobei die Versorgungsstation (3) für den wenigstens einen Anschlusspunkt ein angeschlagenes Anschlusskabel (2, 2.1, 2.2) und einen endseitig an dem Anschlusskabel (2, 2.1, 2.2) festgelegten Stecker (16.1, 16.2) aufweist zum Verbinden der Versorgungsstation (3) mit dem Fahrzeug, und umfassend wenigstens eine Kabelhalteanordnung (1, 1.1, 1.2) nach einem der Ansprüche 1 bis 11, wobei das Halteseil (6, 6.1, 6.2) der Kabelhalteanordnung (1, 1.1, 1.2) an dem Anschlusskabel (2, 2.1, 2.2) festgelegt ist.

13. Installationsanordnung nach Anspruch 12, **dadurch gekennzeichnet, dass** ein in eine Anschlusskabellängsrichtung bestimmter Abstand zwischen dem Stecker (16.1, 16.2) und einem Haltepunkt (15, 15.1, 15.2), an dem das Halteseil (6, 6.1, 6.2) an dem Anschlusskabel (2, 2.1, 2.2) festgelegt ist, wenigstens 20 % und höchstens 80 % einer Gesamtlänge des Anschlusskabels (2, 2.1, 2.2) entspricht.

14. Installationsanordnung nach Anspruch 12 oder 13, **dadurch gekennzeichnet, dass** die Versorgungsstation (3) wenigstens zwei Anschlusspunkte und für jeden Anschlusspunkt ein eigenes Anschlusskabel (2, 2.1, 2.2) mit einem Stecker (16.1, 16.2) vorsieht und dass für jeden Anschlusspunkt eine Kabelhalteanordnung (1, 1.1, 1.2) vorgesehen ist.

15. Installationsanordnung nach einem der Ansprüche 12 bis 14, **dadurch gekennzeichnet, dass** die Versorgungsstation (3) und die wenigstens eine Kabelhalteanordnung (1, 1.1, 1.2) getrennt am Boden (4) festgelegt sind und/oder dass die Versorgungsstation (3) einen eigenen Sockel (12) zur Festlegung der Versorgungsstation (3) an dem Boden (4) vorsieht.
